# EUROPÄISCHE PATENTANMELDUNG

(11) **EP 2 128 046 A1**
(43) Veröffentlichungstag der Anmeldung: **02.12.2009**
(21) Anmeldenummer: 09153235.8
(22) Anmeldetag: 19.02.2009
(51) Int. Cl.: B65G 1/02

(54) **Befestigungselement für eine Rollenleiste und Durchlaufregal**

(30) Priorität: 26.05.2008 DE 102008001972
(71) Anmelder: BITO-Lagertechnik Bittmann GmbH, 55590 Meisenheim (DE)
(72) Erfinder: KEMPERDICK, Artur, 55758, Niederwörresbach (DE)
(74) Vertreter: Richardt, Markus Albert

(57) **Zusammenfassung**

Die Erfindung betrifft ein Befestigungselement zur Befestigung einer Rollenleiste (100) an einem Regalrahmen (144) mit
- einem ersten Aufnahmebereich (119) zur Aufnahme eines Endes (106; 106.1, 106.2, 106.3, 106.4) der Rollenleiste,
- einem Vorsprung (120) zur Bildung eines zweiten Aufnahmebereichs (121) für eine Verbindungsstrebe (108) des Regalrahmens,

wobei der Vorsprung eine Öffnung (124) zum lösbaren Anbau eines Anbauteils (117) an das Befestigungselement aufweist.

## Beschreibung

Die Erfindung betrifft ein Befestigungselement zur Befestigung einer Rollenleiste an einem Regalrahmen sowie ein Durchlaufregal.

Aus dem Stand der Technik sind Durchlaufregale mit Rollenbahnen an sich bekannt. Hierzu wird verwiesen auf DE 42 00 641 A1, G 85 00 141, EP 1 134 171 B1, US RE 38,517 E, US 3,900,112 und US 5,887,732.

Der Erfindung liegt dem gegenüber die Aufgabe zu Grunde, ein verbessertes Befestigungselement zur Befestigung einer Rollenleiste an einem Regalrahmen insbesondere eines Durchlaufregals zu schaffen sowie ein verbessertes Durchlaufregal.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Befestigungselement zur Befestigung einer Rollenleiste an einem Regalrahmen insbesondere eines Durchlaufregals mit einem ersten Aufnahmebereich zur Aufnahme eines Endes der Rollenleiste und mit einem Vorsprung zur Bildung eines zweiten Aufnahmebereichs für eine Verbindungsstrebe des Regalrahmens geschaffen, wobei der Vorsprung eine Öffnung zum lösbaren Anbau eines Anbauteils an das Befestigungselement aufweist.

Ausführungsformen der Erfindung sind besonders vorteilhaft, da der Vorsprung des Befestigungselements mit seiner Öffnung zum lösbaren Anbau eines Anbauteils eine effizientere Produktion, einen leichteren Aufbau sowie eine bequemere Handhabung eines Durchlaufregals ermöglicht.

Zum einen ermöglicht nämlich der Vorsprung den Anbau einer ersten Ausführungsform des Anbauteils an dem Befestigungselement, wobei durch das Anbauteil ein Endanschlag für die Rollenleiste gebildet wird. Dies hat zum einen den Vorteil, dass für beide Enden der Rollenleiste baugleiche Befestigungselemente verwendet werden können. Nur an das untere Befestigungselement wird das Anbauteil montiert, um dort einen Endanschlag zu realisieren. Die Tatsache, dass das gleiche Befestigungselement für das obere und das untere Ende der Rollenleiste verwendet werden kann vereinfacht auch den Aufbau. Der Anschlag kann zum Beispiel senkrecht nach oben von dem Befestigungselement abstehen oder in einem anderen Winkel, wie z.B. 45 Grad.

Ein weiterer Vorteil ergibt sich beim Betrieb des Durchlaufregals: Wenn die Last, mit der der Endanschlag beaufschlagt wird, zu groß ist, so kann der Endanschlag verbiegen, so dass er unbrauchbar wird. Dies kann zum Beispiel dann der Fall sein, wenn ein Transport- und Lagerbehälter mit einer Überlast oder ein zu schweres Stückgut auf das obere Ende der Rollenbahn gelegt wird. Zum Beispiel der Behälter trifft dann mit einem entsprechend großen Impuls auf den Endanschlag, so dass dieser hierdurch verbiegen kann. Nach Ausführungsformen der Erfindung ist es zum Austausch des Endanschlags nicht erforderlich, dass das gesamte Befestigungselement ausgetauscht oder gar die betreffende Rollenleiste demontiert wird. Vielmehr ist es lediglich erforderlich, dass das auszutauschende Anbauteil von dem Befestigungselement gelöst wird, und durch ein Ersatzanbauteil ersetzt wird. Hierzu ist es nicht einmal erforderlich, das Befestigungselement oder die Rollenleiste zu demontieren.

Eine zweite Ausführungsform des Anbauteils kann alternativ oder zusätzlich zur Verbindung des Befestigungselements mit einem weiteren solchen Befestigungselement verwendet werden. Das Anbauteil hat beispielsweise eine vordere und eine hintere Befestigungslasche, mit denen es in die jeweiligen Öffnungen der miteinander zu verbindenden Befestigungselemente eingeführt werden kann.

Nach einer Ausführungsform der Erfindung bildet das Anbauteil in seiner zweiten Ausführungsform zusammen mit den durch das Anbauteil verbundenen Befestigungselementen den Aufnahmebereich für die Verbindungsstrebe des Durchlaufregals. Beispielsweise wird durch das Anbauteil und den hiermit verbundenen Befestigungselementen ein nach unten offenes U-Profil gebildet.

Dies ist besonders vorteilhaft für Durchlaufregale mit einem "abgeknickten" Verlauf. Solche Durchlaufregale haben zum Beispiel einen oberen Abschnitt mit einem ersten Gefälle und einen unteren Abschnitt mit einem zweiten Gefälle, wobei das zweite Gefälle größer ist, als das erste Gefälle. Der Übergang von dem ersten Abschnitt zu dem zweiten Abschnitt kann durch die zweite Ausführungsform des Anbauteils realisiert werden, indem es nämlich zwei in Transportrichtung aufeinander folgende Rollenleisten abgeknickt miteinander verbindet. Hierzu kann das Anbauteil einen vorgegebenen Knickwinkel aufweisen oder bei der Montage gebogen werden, um den gewünschten Knickwinkel zu realisieren.

Ausführungsformen der Erfindung sind besonders vorteilhaft, da die Befestigungselemente für verschiedene Zwecke verwendet werden können: Beispielsweise ist ein erfindungsgemäßes Befestigungselement ohne Anbauteil am oberen Ende der Rollenbahn angeordnet. Zum Übergang von dem ersten Abschnitt zu dem zweiten Abschnitt der Rollenbahn sind die dort aufeinander treffenden Befestigungselemente mit Hilfe eines Anbauteils der zweiten Ausführungsform miteinander verbunden. Schließlich ist das an dem unteren Ende der Rollenbahn angeordnete Befestigungselement mit einem Anbauteil der ersten Ausführungsform versehen, so dass dort ein Endanschlag gebildet wird. Die Befestigungselemente der ersten und zweiten Ausführungsformen können identisch gestaltet oder unterschiedlich sein.

Nach weiteren Ausführungsformen der Erfindung kann es sich bei dem Anbauteil um einen Beschriftungsträger, wie z.B. einen Etikettenträger oder eine Etikettenleiste, handeln. Der Beschriftungsträger wird beispielsweise mittels einer Schnappverbindung an der Öffnung des Befestigungselements befestigt. Der Beschriftungsträger kann optional so ausbildet sein, dass er auch den Endanschlag 126 ausbildet.

In einem weiteren Aspekt betrifft die Erfindung ein Durchlaufregal, welches durch Rollenleisten gebildet wird, die mit Hilfe von Ausführungsformen des erfindungsgemäßen Befestigungselements an einem Regalrahmen befestigt sind.

Nach Ausführungsformen der Erfindung hat das Durchlaufregal zumindest zwei Abschnitte, die unterschiedliche Gefälle aufweisen.

In einem weiteren Aspekt betrifft die Erfindung ein Regalsystem mit erfindungsgemäßen Befestigungselementen.

Im weiteren werden Ausführungsformen der Erfindung mit Bezugnahme auf die Zeichnungen näher erläutert. Es zeigen:
- Figur 1: eine schematische, perspektivische Darstellung einer Ausführungsform eines erfindungsgemäßen Befestigungselements mit einem Anbauteil zur Bildung eines Endanschlags,
- Figur 2: eine Ausführungsform eines erfindungsgemäßen Befestigungselements mit einem demontierten Anbauteil zur Bildung eines Endanschlags,
- Figur 3: die Ausführungsform des Befestigungselements der Figur 2 mit dem montierten Anbauteil,
- Figur 4: eine weitere Ausführungsform von zwei erfindungsgemäßen Befestigungselementen und einem demontierten Anbauteil zur Verbindung der Befestigungselemente,
- Figur 5: die Ausführungsform gemäß Figur 4, wobei das Anbauteil an einem der Befestigungselemente angebaut worden ist,
- Figur 6: die Ausführungsform der Figuren 4 und 5, nachdem die Befestigungselemente durch das Anbauteil verbunden worden sind,
- Figur 7: eine schematische Seitenansicht einer Ausführungsform eines erfindungsgemäßen Durchlaufregals.

Elemente der nachfolgenden Ausführungsformen, die einander entsprechen, sind mit denselben Bezugszeichen gekennzeichnet.

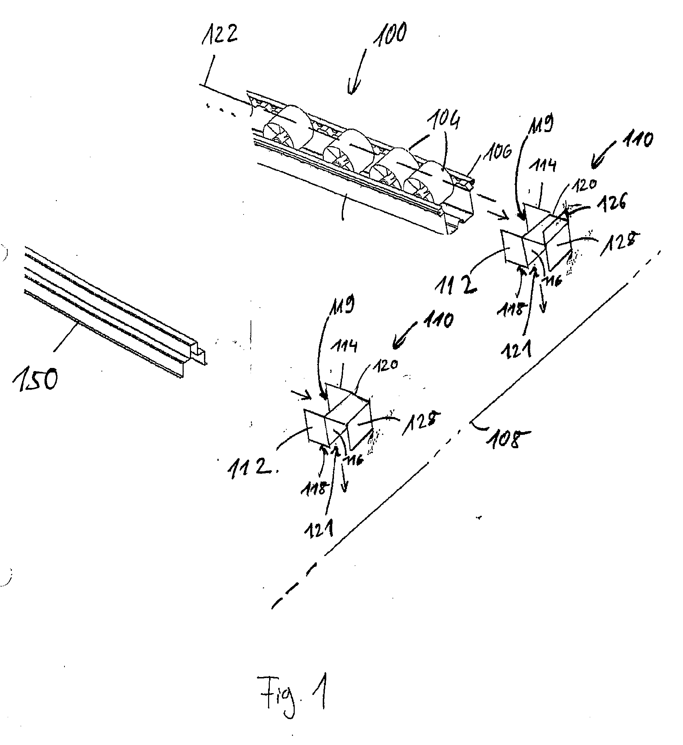

Die Figur 1 zeigt eine Rollenleiste 100. Die Rollenleiste 100 besteht aus einer Trägerleiste 102, in welcher Rollen 104 hintereinander angeordnet sind.

Zur Befestigung der Rollenleiste 100 an einer in horizontaler Richtung verlaufenden Verbindungsstrebe 108 eines Durchlaufregals dient ein Befestigungselement 110. Das Befestigungselement 110 hat einander gegenüberliegende Seiten 112, 114, eine Stirnseite 116, die die Seiten 112, 114 miteinander verbindet, sowie eine Bodenseite 118. Durch die Seiten 112, 114, die Stirnseite 116 und die Bodenseite 118 wird ein erster Aufnahmebereich 119 für ein Ende 106 der Rollenleiste 100 gebildet, in welchen das Ende 106 eingeführt werden kann, um es dort zu haltern.

Von der Stirnseite 116 geht ein Vorsprung 120 aus. Der Vorsprung 120 erstreckt sich in der durch die Rollenleiste 100 definierten Transportrichtung unterhalb der durch die Radien der Rollen 104 definierten Transportebene 122. Beispielsweise schließt sich der Vorsprung 120 an die obere Begrenzung der Trägerleiste 102 bündig an. Der Vorsprung dient zur Bildung eines zweiten Aufnahmebereichs 121 für die Verbindungsstrebe.

Beispielsweise begrenzt der Vorsprung nur einen Teil des zweiten Aufnahmebereichs. Der zweite Aufnahmebereich 121 wird dann durch die Montage eines Anbauteils vollständig definiert.

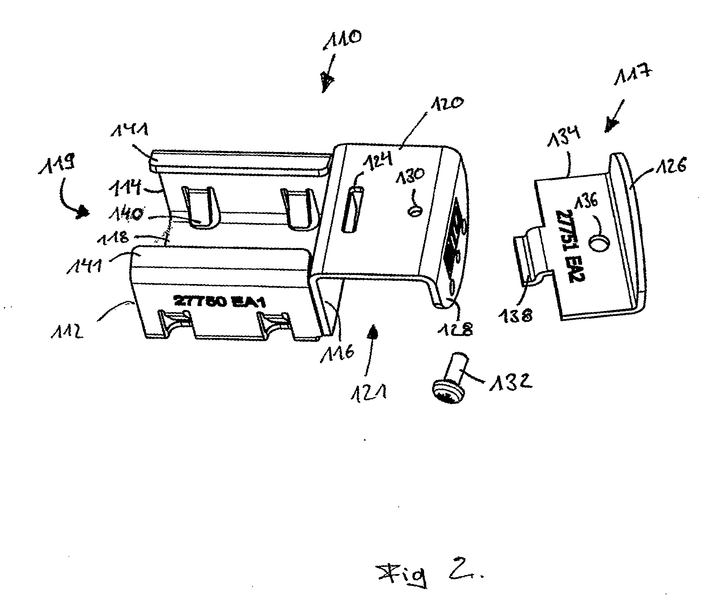

An dem Vorsprung 120 ist eine in der Figur 1 nicht gezeigte Montageöffnung 124 (vgl. beispielsweise Figuren 2, 4 und 5) ausgebildet. Die Montageöffnung 124 dient zum lösbaren Anbau des Anbauteils 117 (vgl. auch Fig. 2 bis 6) an den Vorsprung 120 des Befestigungselements 110.

In einer ersten Ausführungsform bildet das Anbauteil 117 in seiner in der Figur 1 gezeigten Montageposition einen nach oben abstehenden Endanschlag 126. Dieser steht nach der Montage des Durchlaufregals über der Transportebene 122 hervor, so dass ein Stückgut oder ein Behälter nach Durchlaufen der von zwei benachbarten Rollenleisten 100 gebildeten Rollenbahn von den Endanschlägen der benachbarten Rollenleisten 100 gestoppt wird.

Das Befestigungselement 110 hat ferner ein Seitenelement 128, welches von dem Vorsprung 120 ausgehend nach unten absteht. Durch die Stirnseite 116, den Vorsprung 120 und das Seitenelement 128 werden bei dieser Ausführungsform ein nach unten offenes U-Profil gebildet, mit Hilfe dessen das Befestigungselement 110 mit der darin befindlichen Rollenleiste 100 in die Verbindungstrebe 108 eingehängt werden kann.

Das Seitenelement 128 kann mit dem Vorsprung 120 fest verbunden sein und eine bauliche Einheit bilden. Eine solche Ausführungsform zeigen die Fig. 2 bis 4. Bei diesen Ausführungsformen ist also der zweite Aufnahmebereich, d.h. beispielsweise das U-Profil, zur Aufnahme der Verbindungsstrebe bereits ohne Anbauteil vollständig ausgebildet.

Alternativ kann das Seitenelement 128 auch eine bauliche Einheit mit dem Endanschlag 126 bilden und zusammen mit diesem an der Montageöffnung des Vorsprungs angebaut werden. Bei solchen Ausführungsformen wird der zweite Aufnahmebereich 121 durch den Anbau des Anbauteils vollständig ausgebildet.

Die Figur 2 zeigt eine Ausführungsform des Befestigungselements 110, bei der das Seitenelement 128 einstückig mit dem Vorsprung 120 ausgebildet ist. Die Montageöffnung 124 ist hier schlitzförmig ausgebildet. Die Montageöffnung 124 ist an dem Ende des Vorsprungs 120 angeordnet, welches der Stirnseite 116 zugewandt ist, und zwar beispielsweise im wesentlichen senkrecht zur Transportrichtung. An ihrem anderen Ende, welches dem Seitenelement 128 zugewandt ist, hat der Vorsprung 120 eine Öffnung 130 mit einem Innengewinde, in welches eine Schraube 132 geschraubt werden kann.

Das Anbauteil 117 hat bei dieser Ausführungsform eine Basis 134, von der der Endanschlag 126 nach oben absteht. Die Basis 134 hat eine Montageöffnung 136, welche an dem dem Endanschlag zugewandten Ende der Basis 134 angeordnet ist. An ihrem anderen Ende hat die Basis 134 eine Befestigungslasche 138.

Die Basis 134 und der Vorsprung 120 können als Ebenen ausgebildet sein, so wie in der Fig. 2 gezeigt. Die Basis 134 und der Vorsprung 120 können aber auch eine andere Formgebung aufweisen. Beispielsweise kann der Vorsprung 120 an seiner Oberfläche eine erste Profilierung aufweisen und die Basis 134 kann eine zweite Profilierung aufweisen. Die ersten und zweiten Profilierungen sind so ausgebildet, dass sie sich zusammenfügen lassen.

Zum Anbau des Anbauteils 117 an den Vorsprung 120 wird zunächst die Befestigungslasche 138 durch die Montageöffnung 124 hindurchgeführt. Dann wird die Schraube 132 durch die Montageöffnung 136 hindurchgeführt, um sie in der Öffnung 130 festzuschrauben. Hierdurch wird das Anbauteil 117 an dem Vorsprung 120 lösbar fixiert.

An den Oberkanten der Seiten 112 und 114 des Befestigungselements 110 sind Klemmelemente 141 ausgebildet. In der hier betrachteten Ausführungsform bilden die Klemmelemente 141 einen Hinterschnitt, um das Ende 106 der Trägerleiste 102 zu haltern. Wenn das Ende 106 der Rollenleiste 100 (vgl. Figur 1) in den ersten Aufnahmebereich 119 hinein geschoben wird, deformieren sich die Klemmelemente 141 und üben so einen Anpressdruck auf die Trägerleiste 102 aus, um diese in dem Aufnahmebereich 119 festzuhalten.

An den der Seiten 112 und 114 des Befestigungselements 110 sind ferner elastische Elemente 140 ausgebildet. In der hier betrachteten Ausführungsform handelt es sich bei den elastischen Elementen 140 um zungenförmige Elemente, die in den ersten Aufnahmebereich 119 hineinragen. Die elastischen Elementen 140 ermöglichen eine alternative Verwendung des Befestigungselements 110 zur Befestigung einer Trennleiste 150 (vgl. Fig. 1) an der Verbindungsstrebe 108. Die Trennleisten dienen der Kanaleinteilung. Ein gegenseitiges Blockieren zweier nebeneinander laufender Lagereinheiten wird somit vermieden. Beispielsweise wird ein Kanal durch zwei parallele Rollenleisten 100 gebildet, wobei links und rechts von den Rollenleisten 100 je eine Trennleiste 150 angeordnet ist.

Die Trennleiste 150 hat ein Trennleistenprofil, welches sich über die Transportebene 122 hinaus erstreckt, um so die Kanaleinteilung zu bewirken. Der erste Aufnahmebereich 119 ist daher vorzugsweise zumindest teilweise nach oben offen, um die Aufnahme eines solchen Trennleistenprofils zu ermöglichen., wie dies bei den in den Figuren 1 bis 6 gezeigten Ausführungsformen der Fall ist. Bei der Verwendung eines der Befestigungselemente 110 zur Befestigung einer der Trennleisten 150 ist die Bildung eines Endanschlags 126 nicht erforderlich, wie in Fig. 1 gezeigt. Je nach Ausführungsform kann das Befestigungselement 110 daher für diesen Zweck ohne Anbauteil eingesetzt werden, oder mit einem Anbauteil, welches zur Vervollständigung des zweiten Aufnahmebereichs 121 erforderlich ist und/oder mit einem Anbauteil zur Bildung eines Beschriftungsträgers.

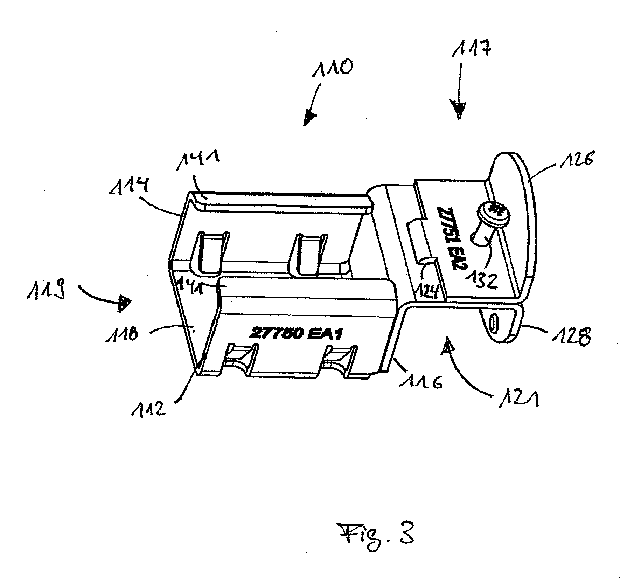

Die Figur 3 zeigt das Anbauteil 117 in der Ausführungsform der Figur 2 während der Montage an dem Vorsprung 120, nachdem die Befestigungslasche 138 durch die Montageöffnung 124 geführt worden ist. Zur Vervollständigung der Montage des Anbauteils 117 muss hier nur noch die Schraube 132 festgezogen werden. Zur Demontage des Anbauteils 117, etwa um dieses gegen ein Ersatzteil auszutauschen, kann analog vorgegangen werden, das heißt zur Demontage wird die Schraube 132 gelöst und anschließend wird die Befestigungslasche 138 aus der Montageöffnung 124 herausgezogen.

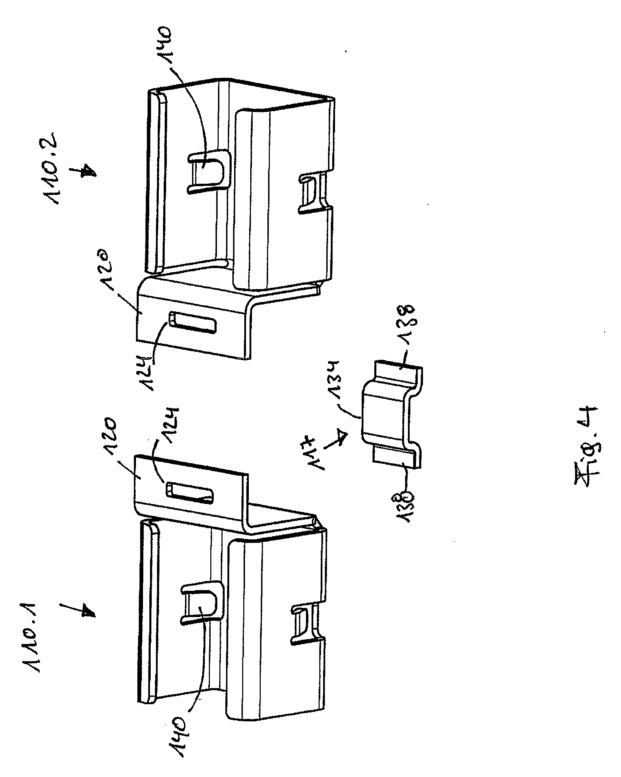

Die Figur 4 zeigt eine alternative Ausführungsform des Befestigungselements 110. Bei dieser Ausführungsform hat der Vorsprung 120 lediglich die Montageöffnung 124. Diese Ausführungsform ist geeignet zur Herstellung einer Verbindung zwischen zwei Exemplaren der erfindungsgemäßen Befestigungselemente 110.1 und 110.2.

Eine Verbindung der Befestigungselemente 110.1 und 110.2 kann durch die in der Figur 4 gezeigte Ausführungsform des Anbauteils 117 geschaffen werden. Wie in der Ausführungsform der Figuren 2 und 3 hat das Anbauteil 117 eine Basis 134. Von der Basis 134 gehen in Transportrichtung nach vorne und nach hinten jeweils eine Befestigungslasche 138 ab.

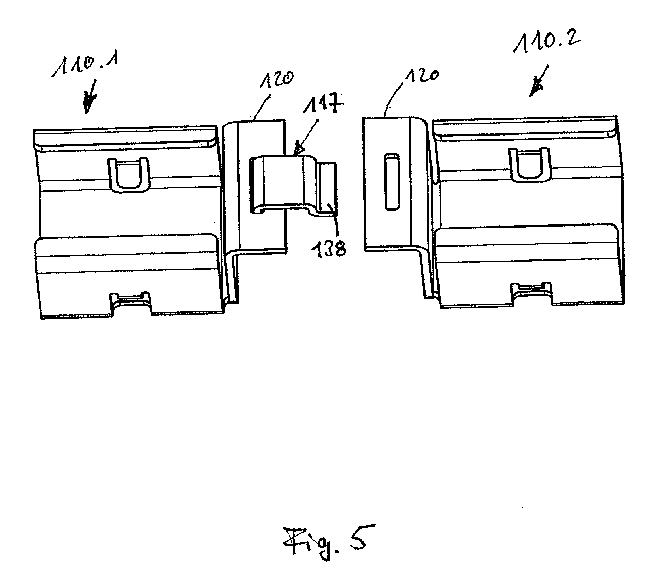

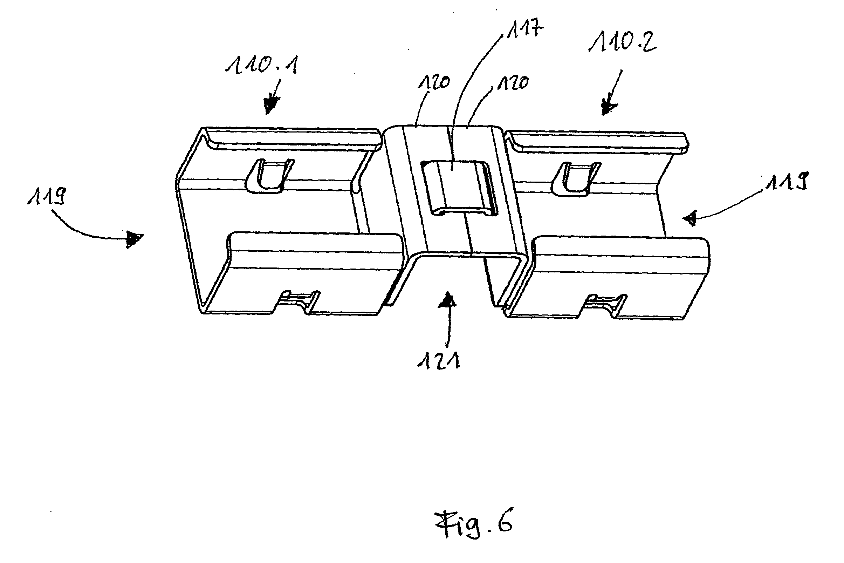

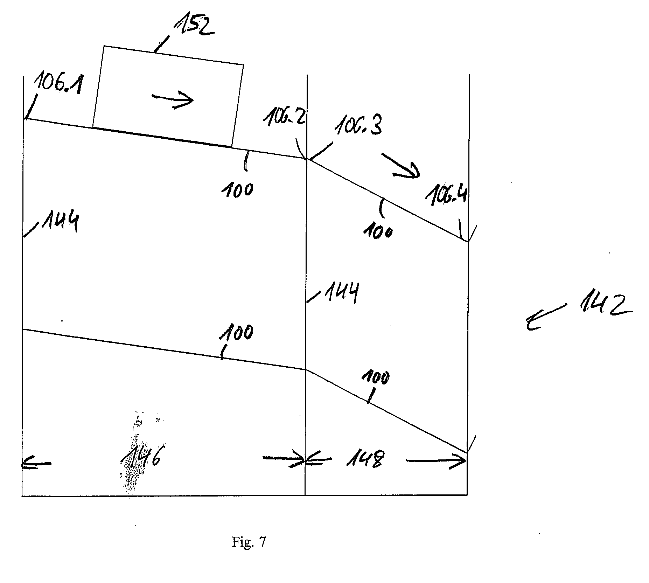

Zur Verbindung der Befestigungselemente 110.1 und 110.2 mit Hilfe des Anbauteils 117 wird zunächst eine der Befestigungslaschen 138 in eine der Öffnungen 124 zum Beispiel des Befestigungselements 110 eingeführt, wie in der Figur 5 dargestellt. Anschließend wird die andere Befestigungslasche 138 in die Montageöffnung 124 des anderen Befestigungselements, das heißt hier des Befestigungselements 110.2. eingeführt. Die miteinander verbundenen Befestigungselemente 110.1 und 110.2 sind in der Figur 6 dargestellt. Durch die miteinander verbundenen Befestigungselemente 110.1 und 110.2 können also zwei Rollenleisten 100 in Transportrichtung miteinander verbunden werden. Dies ist insbesondere vorteilhaft zur Verbindung unterschiedlich geneigter Abschnitte des Durchlaufregals miteinander, wie in der Ausführungsform der Figur 7 gezeigt.

Die durch das Anbauteil 117 miteinander verbundenen Vorsprünge 120 der Befestigungselemente 110.1 und 110.2 bilden hier zusammen mit den Stirnseiten 116 den zweiten Aufnahmebereich, welcher hier als ein nach unten offenes U-Profil ausgebildet ist. Das U-Profil kann dazu verwendet werden kann, eine Verbindungsstrebe 108 des Durchlaufregals aufzunehmen.

Die Figur 7 zeigt eine schematische Seitenansicht einer Ausführungsform eines erfindungsgemäßen Durchlaufregals 142. Das Durchlaufregal 142 hat einen Regalrahmen 144 mit vertikal verlaufenden Rahmenelementen, wie in der Figur 7 gezeigt, sowie in horizontaler Richtung verlaufenden Verbindungsstreben 108, wie in Fig. 1 gezeigt. Der Regalrahmen 144 kann durch Regalrahmenelemente eines Regalsystems realisiert sein.

Das Durchlaufregal 142 hat einen ersten Abschnitt 146, der ein erstes Gefälle aufweist, und einen zweiten Abschnitt 148 mit einem zweiten Gefälle, welches größer ist als das erste Gefälle. Beispielsweise beträgt das erste Gefälle in dem ersten Abschnitt 4° und das zweite Gefälle in dem zweiten Abschnitt 16°.

In dem Abschnitt 146 werden übereinander angeordnete Rollenbahnen durch je zwei parallel angeordnete Rollenleisten 100 gebildet. Ebenso verhält es sich für den Abschnitt 148.

Jede Rollenleiste 100 in dem Bereich 146 ist an ihrem oberen Ende 106.1 mit Hilfe eines Befestigungselements 110 an der dort in horizontaler Richtung verlaufenden Verbindungsstrebe 108 des Regalrahmens 144 befestigt, indem das von dem Befestigungselement 110 gebildete nach unten offene U-Profil, d.h. der zweite Aufnahmebereich, in diese Verbindungsstrebe eingehängt ist. Das Befestigungselement 110 zur Befestigung der oberen Enden 106.1 hat vorzugsweise kein Anbauteil oder ein Anbauteil nur zur vollständigen Definition des zweiten Aufnahmebereichs ohne Endanschlag 126, so dass zum Beispiel ein Behälter 152 bequem auf das obere Ende der Rollenbahn gestellt werden kann.

Die unteren Enden 106.2 der Rollenleisten in dem Abschnitt 146 sind dagegen mit den oberen Enden 106.3 der Rollenleisten 100 in dem Abschnitt 148 beispielsweise durch die in der Figur 6 gezeigte Ausführungsform des Befestigungselements 110 und der dort gezeigten Ausführungsform des Anbauteils 117 verbunden. In dem Übergang von dem Abschnitt 146 zu dem Abschnitt 148 des Durchlaufregals 142 kann eine horizontale Verbindungsstrebe angeordnet sein, auf welche das von den Befestigungselementen 110.1 und 110.2 in der Ausführungsform gemäß Figur 6 gebildete nach unten offene U-Profil, d.h. der zweite Aufnahmebereich, gelegt ist.

Das Anbauteil 117 in der Ausführungsform gemäß Figur 6 kann ein rotatorisches Spiel der durch das Anbauteil verbundenen Befestigungselemente 110.1 und 110.2 erlauben, um so den Übergang von dem ersten zu dem zweiten Gefälle zu realisieren. Es kann aber auch erforderlich sein, dass das Anbauteil und/oder die Vorsprünge 120 bei der Montage gebogen werden, um so den Übergang zu realisieren. Alternativ hat das Anbauteil einen vordefinierten Knickwinkel.

An den unteren Enden 106.4 sind die Rollenleisten 110 in dem Bereich 148 mit dem Regalrahmen 144 über Befestigungselemente 110 in der Ausführungsform zum Beispiel gemäß Figur 1 oder Figur 3 verbunden. In diesen Ausführungsformen hat das Befestigungselement 110 einen durch das Anbauteil 117 realisierten Endanschlag 126.

### Bezugszeichenliste

- 100: Rollenleiste
- 102: Trägerleiste
- 104: Rollen
- 106: Ende
- 108: Verbindungstrebe
- 110: Befestigungselement
- 110.1: Befestigungselement
- 110.2: Befestigungselement
- 112: Seite
- 114: Seite
- 116: Stirnseite
- 117: Anbauteil
- 118: Bodenseite
- 119: ersten Aufnahmebereich
- 120: Vorsprung
- 121: zweiter Aufnahmebereich
- 122: Transportebene
- 124: Montageöffnung
- 126: Endanschlag
- 128: Seitenelement
- 130: Öffnung
- 132: Schraube
- 134: Basis
- 136: Montageöffnung
- 138: Befestigungslasche
- 140: elastisches Element
- 141: Klemmelement
- 142: Durchlaufregal
- 144: Regalrahmen
- 146: Abschnitt
- 148: Abschnitt
- 150: Trennleiste
- 152: Behälter

## Patentansprüche

1. Befestigungselement zur Befestigung einer Rollenleiste (100) an einem Regalrahmen (144) mit
- einem ersten Aufnahmebereich (119) zur Aufnahme eines Endes (106; 106.1, 106.2, 106.3, 106.4) der Rollenleiste,
- einem Vorsprung (120) zur Bildung eines zweiten Aufnahmebereichs (121) für eine Verbindungsstrebe (108) des Regalrahmens,
wobei der Vorsprung eine Öffnung (124) zum lösbaren Anbau eines Anbauteils (117) an das Befestigungselement aufweist.

2. Befestigungselement nach Anspruch 1, wobei das Ende der Rollenleiste durch eine Trägerleiste (102) für die Rollen gebildet wird, wobei der erste Aufnahmebereich so ausgebildet ist, dass er das Ende der Trägerleiste zumindest von unten und seitlich umschließt.

3. Befestigungselement nach Anspruch 2, wobei in dem ersten Aufnahmebereich seitlich Klemmelemente (141) zur Ausübung eines Anpressdrucks auf das Ende der Trägerleiste angeordnet sind.

4. Befestigungselement nach Anspruch 1, 2 oder 3, wobei die Öffnung (124) in dem Vorsprung schlitzförmig ausgebildet ist.

5. Befestigungselement nach einem der vorhergehenden Ansprüche, wobei das Anbauteil zumindest eine Befestigungslasche (138) zur Einführung in die Öffnung (124) des Vorsprungs aufweist.

6. Befestigungselement nach Anspruch 5, wobei der Vorsprung ein Gewinde (130) zur Ausbildung einer Schraubverbindung mit dem Anbauteil aufweist, wenn die Befestigungslasche des Anbauteils in die Öffnung (124) des Vorsprungs eingeführt ist.

7. Befestigungselement nach einem der vorhergehenden Ansprüche, wobei das Anbauteil in seiner an dem Vorsprung eingenommenen Anbauposition einen nach oben abstehenden Endanschlag (126) aufweist.

8. Befestigungselement nach einem der vorhergehenden Ansprüche, wobei an dem Vorsprung ein nach unten offenes U-Profil zur Bildung des zweiten Aufnahmebereichs ausgebildet ist.

9. Befestigungselement nach einem der vorhergehenden Ansprüche, wobei durch das montierte Anbauteil und den Vorsprung ein nach unten offenes U-Profil zur Bildung des zweiten Aufnahmebereichs ausgebildet ist.

10. Befestigungselement nach einem der vorhergehenden Ansprüche, wobei das Anbauteil zur Verbindung des Befestigungselements mit einem weiteren Befestigungselement ausgebildet ist.

11. Befestigungselement nach Anspruch 10, wobei das Anbauteil eine weitere Befestigungslasche zur Befestigung an dem weiteren Befestigungselement aufweist.

12. Durchlaufregal mit einem Regalrahmen (144), wobei eine Rollenleiste (100) zwischen zwei Verbindungsstreben (108) des Regalrahmens durch erste und zweite Befestigungselemente (110; 110.1, 110.2) nach einem der vorhergehenden Ansprüche 1 bis 11 befestigt ist.

13. Regalsystem mit Regalrahmenelementen zur Bildung eines Regalrahmens (144), mit Rollenleisten (100), Befestigungselementen (110; 110.1, 110.2) nach einem der vorhergehenden Ansprüche 1 bis 11, ersten Anbauteilen zur Bildung von Endanschlägen (126) und zweiten Anbauteilen zur Verbindung zweier der Befestigungselemente

14. Regalsystem nach Anspruch 13, mit dritten Anbauteilen, die als Beschriftungsträger ausgebildet sind.

15. Regalsystem nach Anspruch 13 oder 14, mit Trennleisten (150), wobei die ersten Aufnahmebereiche (119) der Befestigungselemente nach oben zumindest teilweise offen sind, um je ein Trennleistenprofil einer der Trennleisten (150) aufnehmen zu können, um es an einer der Verbindungsstreben des Regalrahmens zu befestigen.
